(19) Europäisches Patentamt

European Patent Office

Office européen des brevets

(11) **EP 1 882 316 B1**

(12) **FASCICULE DE BREVET EUROPEEN**

(45) Date de publication et mention de la délivrance du brevet:
**24.03.2010 Bulletin 2010/12**

(21) Numéro de dépôt: **06755516.9**

(22) Date de dépôt: **19.05.2006**

(51) Int Cl.:
**H04B 7/185** (2006.01)

(86) Numéro de dépôt international:
**PCT/FR2006/001146**

(87) Numéro de publication internationale:
**WO 2006/123064 (23.11.2006 Gazette 2006/47)**

(54) **PROCEDE D'ATTRIBUTION DE SOUS BANDES DE FREQUENCES A DES LIAISONS RADIOFREQUENCES MONTANTES ET RESEAU METTANT EN ŒVRE UN TEL PROCEDE**

VERFAHREN ZUM VERGEBEN VON FREQUENZ-TEILBÄNDERN AN AUFWÄRTS-HOCHFREQUENZVERBINDUNGEN UND NETZWERK ZUM AUSFÜHREN DES VERFAHRENS

METHOD FOR ASSIGNING FREQUENCY SUBBANDS TO UPSTREAM RADIOFREQUENCY CONNECTIONS AND A NETWORK FOR CARRYING OUT SAID METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.05.2005 FR 0505101**

(43) Date de publication de la demande:
**30.01.2008 Bulletin 2008/05**

(73) Titulaire: **Centre National d'Etudes Spatiales ( C.N.E.S.)**
**75039 Paris Cedex 01 (FR)**

(72) Inventeurs:
• **BAZILE, Caroline**
**F-31400 Toulouse (FR)**
• **DUVERDIER, Alban**
**F-31500 Toulouse (FR)**
• **SOMBRIN, Jacques**
**F-31400 Toulouse (FR)**

(74) Mandataire: **Cabinet BARRE LAFORGUE & associés**
**95, rue des Amidonniers**
**31000 Toulouse (FR)**

(56) Documents cités:
**US-B1- 6 704 543**

• **THE R&D GROUP OF THE ADVANCED SATELLITE MOBIL SYSTEM TASK FORCE: "Satellite Mobile System Architectures" INTERNET ARTICLE, 17 juillet 2002 (2002-07-17), XP002365476 Extrait de l'Internet: URL:http://www.cordis.lu/ist/ka4/mobile/pa ssword/02/75_architecture_report_v2.pdf>**
• **"Digital Video Broadcasting (DVB); Interaction channel for satellite distribution systems; ETSI EN 301 790" mars 2003 (2003-03), ETSI STANDARDS, EUROPEAN TELECOMMUNICATIONS STANDARDS INSTITUTE, SOPHIA-ANTIPO, FR , XP014003845 ISSN: 0000-0001 cité dans la demande alinéa [06.7] - alinéa [6.7.2.3] alinéa [8.3.1.6] alinéa [8.4.4] alinéa [8.5.5.7]**
• **KI-DONG LEE ET AL: "Optimal scheduling for timeslot assignment in MF-TDMA broadband satellite communications" 24 septembre 2002 (2002-09-24), VTC 2002-FALL. 2002 IEEE 56TH. VEHICULAR TECHNOLOGY CONFERENCE PROCEEDINGS. VANCOUVER, CANADA, SEPT. 24 - 28, 2002, IEEE VEHICULAR TECHNOLGY CONFERENCE, NEW YORK, NY : IEEE, US, PAGE (S) 1560-1564 , XP010608691 ISBN: 0-7803-7467-3 page 1560 - page 1561**

**Description**

L'invention concerne un procédé d'attribution dynamique de sous bandes, dites bandes de liaisons, d'au moins une bande de fréquences, dite bande montante, à des liaisons radiofréquences montantes de terminaux terrestres vers un satellite de télécommunication à plusieurs faisceaux, dit satellite multifaisceau.

L'invention concerne en outre un réseau de transmission de données par satellite comprenant des moyens aptes à mettre en oeuvre le procédé d'attribution dynamique de sous bandes de fréquences.

Dans le contexte de l'invention, le terme radiofréquence désigne toute transmission par propagation de rayonnements électromagnétiques effectuée par des moyens non filaires de télécommunication, y compris par propagation de rayonnements électromagnétiques n'appartenant pas au domaine spectral traditionnel des fréquences radio.

Les satellites de télécommunication sont couramment utilisés pour diffuser des données vers une pluralité de terminaux terrestres. Certains de ces satellites sont adaptés pour recevoir des transmissions de données émises vers eux par les terminaux terrestres. Ceux-ci sont notamment employés dans des systèmes interactifs dans lesquels ils permettent de relayer vers une station terrestre des données émises par des terminaux terrestres.

Des satellites de télécommunication à plusieurs faisceaux, dits satellites multifaisceaux, sont utilisés dans de tels systèmes. Ces satellites permettent d'établir plusieurs liaisons radiofréquences occupant une même bande de fréquences sur des faisceaux différents.

On connaît des schémas, dits schémas de couleur, faisant correspondre une couleur à chacun des faisceaux de ces satellites.

Pour certains satellites, ces schémas de couleur sont utilisés pour décrire l'attribution d'une pluralité de bandes de fréquences aux faisceaux du satellite en vue de transmissions radiofréquences à réaliser dans chacun de ces faisceaux. Dans ces schémas, chaque couleur correspond à une de ces bandes de fréquences.

Certains satellites multifaisceaux permettent par ailleurs d'émettre et recevoir des transmissions polarisées dans plusieurs sens de polarisation. Pour ce type de satellite, chaque couleur peut alors correspondre à la fois à une bande de fréquences attribuée au faisceau ainsi qu'à l'un de deux sens orthogonaux de polarisation des transmissions dans ce faisceau. La polarisation peut être linéaire. Dans ce cas, les deux sens de polarisation sont respectivement horizontal et vertical. Par ailleurs, la polarisation peut être circulaire. Dans ce cas, les deux sens de polarisation sont respectivement circulaire gauche ou circulaire droit.

En outre, certains satellites, tels que le satellite Spaceway ® fabriqué par la société Boeing Satellite Systems Inc. (Los Angeles, Californie, Etats-Unis d'Amérique), sont dotés d'antennes à sauts de faisceaux permettant d'effectuer, à tour de rôle pendant des créneaux temporels distincts, des transmissions radiofréquences dans des faisceaux adjacents auxquels est attribuée une même bande de fréquence et, le cas échéant, un même sens orthogonal de polarisation. Ainsi, chaque couleur peut décrire un créneau temporel de transmission associé au faisceau en vue d'un multiplexage temporel.

Usuellement, le schéma de couleurs associe une couleur à chaque faisceau d'un motif de faisceaux adjacents, chaque faisceau d'un motif ayant une couleur différente de celles des autres faisceaux du motif. Le motif est reproduit pour couvrir toute une zone de service du satellite. Une couleur est ainsi associée à chaque faisceau du satellite de sorte que les faisceaux d'une même couleur soient non adjacents. En particulier, on connaît des schémas de couleurs à trois, quatre, sept couleurs...

Or, des interférences co-fréquence entre des liaisons radiofréquences de faisceaux voisins non adjacents de même couleur se produisent en raison du caractère imparfait de l'isolation de chaque faisceau du satellite par rapport aux autres. En effet, une liaison radiofréquence dans un faisceau produit, hors du champ du faisceau, un rayonnement interférant avec des liaisons de mêmes fréquences, ou de fréquences voisines, dans d'autres faisceaux du satellite.

Lorsque les liaisons montantes subissent toutes un même niveau d'atténuation, les rayonnements interférents co-fréquences ont alors une puissance faible par rapport aux liaisons montantes. Ceci peut notamment se produire dans le cas où les liaisons montantes sont transmises dans des conditions similaires de propagation, tel que par exemple lorsqu'elles sont toutes émises depuis des terminaux terrestres en ciel clair.

Toutefois, le problème d'interférence co-fréquence est accentué lorsqu'une liaison montante, dite liaison montante atténuée, subit une atténuation plus importante que d'autres liaisons montantes. En effet, les rayonnements interférents issus des liaisons montantes moins atténuées sont susceptibles de présenter une densité spectrale de puissance cumulée, dans le faisceau de la liaison montante atténuée au niveau du satellite, significative par rapport à la densité spectrale de puissance de la liaison montante plus atténuée. Le rapport de puissance de la liaison montante par rapport aux interférences, dit rapport C/I, peut alors atteindre une valeur à laquelle une transmission de la liaison montante atténuée ne peut être effectuée dans des conditions requises de qualité de service.

En pratique, ce problème se pose tout particulièrement lorsqu'une liaison montante est émise d'un terminal terrestre en ciel pluvieux tandis que d'autres liaisons montantes sont émises de terminaux terrestres en ciel clair. Le pire cas d'interférence se produit pour des liaisons montantes d'un faisceau en ciel pluvieux alors que les faisceaux voisins de même couleur sont en ciel clair.

On connaît une solution proposée face à ce problème consistant à réaliser un contrôle de puissance des liaisons montantes de sorte que toutes les porteuses arrivent en réception du satellite avec des niveaux voisins de densité spectrale de puissance. Néanmoins, en pratique, on constate qu'un tel contrôle de puissance en temps réel dégrade les liaisons les plus performantes, pose des difficultés de réalisation et intervient souvent à contretemps. D'ailleurs, certains opérateurs interdisent la mise en oeuvre d'un tel contrôle de puissance.

L'invention vise à proposer une solution nouvelle au problème d'interférence co-fréquence énoncé ci-dessus. Plus spécifiquement, l'invention vise à diminuer l'impact des interférences co-fréquence de liaisons montantes interférentes peu ou pas atténuées sur la qualité des transmissions d'une liaison montante plus atténuée, dite liaison montante atténuée.

En particulier, l'invention vise à diminuer l'impact des interférences co-fréquences survenant entre les liaisons montantes transmises dans des faisceaux de même couleur.

L'invention vise par ailleurs à proposer une solution permettant une exploitation efficace des bandes de fréquences, dites bandes montantes, attribuées à chaque faisceau pour la transmission des liaisons montantes, ceci notamment afin de permettre l'établissement d'un nombre optimal de liaisons montantes fonctionnelles entre le satellite et les terminaux terrestres.

L'invention vise en outre à faciliter la régénération des liaisons montantes atténuées.

L'invention vise par ailleurs à proposer une solution ne nécessitant pas d'effectuer un contrôle de puissance des liaisons montantes à l'émission.

L'invention vise à proposer une solution simple, efficace, fiable et économique à concevoir et à mettre en oeuvre.

En outre, l'invention vise à proposer une solution pouvant être mise en oeuvre dans des systèmes existants de télécommunication satellitaire avec voie retour. Plus particulièrement l'invention vise à proposer une solution pouvant être intégrée d'une manière simple dans de tels systèmes, notamment sans nécessiter de modifications du matériel de bord du(des) satellite(s) multifaisceau(x) dudit système.

L'invention vise par ailleurs à proposer une solution compatible avec la norme « diffusion vidéo numérique - canal interactif par satellite » de l'Institut Européen des Normes de Télécommunication (ETSI), dite norme DVB-RCS (cf. ETSI EN 301 790 « DVB, Interaction Channel for Satellite Distribution Systems »).

En particulier, l'invention vise à permettre de réaliser de telles attributions des liaisons montantes dans chaque faisceau du satellite multifaisceau indépendamment des attributions en cours de réalisation dans les autres faisceaux du satellite multifaisceau, de façon à permettre une mise en oeuvre simple de l'attribution dynamique.

Pour ce faire l'invention concerne un procédé d'attribution dynamique de sous bandes, dites bandes de liaisons, d'au moins une bande de fréquences, dite bande montante, à des liaisons radiofréquences montantes de terminaux terrestres vers un satellite de télécommunication -notamment un satellite géostationnaire de télécommunication- à plusieurs faisceaux, dit satellite multifaisceau, procédé dans lequel, pour chaque faisceau d'au moins deux faisceaux auxquels est attribuée une même bande montante pour la transmission de liaisons montantes dans ces faisceaux, des bandes de liaisons sont attribuées aux liaisons montantes de ce faisceau selon un classement en fréquence de ces liaisons montantes établi en fonction des densités spectrales de puissances, en réception par le satellite multifaisceau, de ces liaisons montantes.

Ainsi, les liaisons montantes faisant l'objet de classements établis de la même manière selon leurs densités spectrales de puissance, des liaisons montantes transmises dans des faisceaux différents sur les mêmes fréquences ou sur des fréquences voisines, sont susceptibles de présenter des niveaux de densité spectrale de puissance similaires en réception du satellite multifaisceau. Ainsi, il n'est pas nécessaire d'effectuer un contrôle de puissance à l'émission de ces liaisons montantes.

En particulier, le procédé peut être appliqué à l'ensemble des faisceaux du satellite multifaisceau correspondant à une même couleur. En effet, les interférences co-fréquences se produisant entre les liaisons montantes transmises dans ces faisceaux, malgré le fait que ces faisceaux soient bien souvent non adjacents, sont particulièrement nuisibles pour la qualité des transmissions de ces liaisons montantes. En effet, les antennes de télécommunication des satellites multifaisceaux sont limitées en taille en raison des contraintes sur la masse globale du satellite en vue de permettre un lancement à un coût raisonnable.

Avantageusement et selon l'invention, les faisceaux auxquels est attribuée une même bande montante sont non adjacents.

L'invention s'étend à un réseau de transmission de données par satellite comprenant des moyens d'attribution dynamique de sous bandes, dites bandes de liaisons, d'au moins une bande de fréquences, dite bande montante, à des liaisons radiofréquences montantes de terminaux terrestres vers un satellite de télécommunication -notamment un satellite géostationnaire de télécommunication- à plusieurs faisceaux, dit satellite multifaisceau, réseau dans lequel, pour chaque faisceau d'au moins deux faisceaux auxquels est attribuée une même bande montante pour la transmission de liaisons montantes dans ces faisceaux, les moyens d'attribution dynamique sont adaptés pour réaliser :

- au moins un classement en fréquence des liaisons montantes de ce faisceau en fonction des densités spectrales de puissances, en réception par le satellite multifaisceau, de ces liaisons montantes,
- une attribution des bandes de liaisons à ces liaisons montantes en fonction de ce classement.

Avantageusement et selon l'invention, le classement consiste au moins pour partie à répartir en fréquence une pluralité des liaisons montantes du faisceau dans l'ordre de leurs densités spectrales de puissances en réception par le satellite multifaisceau.

Avantageusement et selon l'invention, le classement consiste au moins pour partie à répartir les liaisons montantes du faisceau parmi une pluralité de portions de la bande montante en fonction des densités spectrales de puissances, en réception par le satellite multifaisceau, des liaisons montantes du faisceau.

Avantageusement et selon l'invention, une première portion de la bande montante correspond à des liaisons montantes, dites liaisons atténuées, dont les densités spectrales de puissances en réception par le satellite multifaisceau sont inférieures à un seuil de densité spectrale de puissance.

Avantageusement et selon l'invention le classement consiste au moins pour partie à répartir en fréquence les liaisons atténuées dans l'ordre de leurs densités spectrales de puissances, en réception par le satellite multifaisceau, dans la première portion de la bande montante.

Avantageusement et selon l'invention, le seuil de densité spectrale de puissance correspond à une puissance inférieure d'au moins 0,5 décibel par rapport à la densité spectrale de puissance, en réception par le satellite multifaisceau, d'une liaison montante de référence.

Avantageusement et selon l'invention, la liaison montante comportant la densité spectrale de puissance la plus élevée parmi les liaisons montantes desdits faisceaux auxquels est attribuée la bande montante, est choisie comme liaison montante de référence.

Avantageusement et selon l'invention, la largeur de bande de la première portion est déterminée en fonction d'une valeur estimée, dite risque estimé d'atténuation, du risque, pour chaque liaison montante desdits faisceaux auxquels est attribuée la bande montante, que cette liaison montante présente une densité spectrale de puissance, en réception par le satellite multifaisceau, inférieure au seuil de densité spectrale de puissance.

Avantageusement et selon l'invention, le risque estimé d'atténuation est déterminé selon au moins un modèle statistique d'atténuation.

En particulier, ces modèles statistiques peuvent être des modèles statistiques d'atténuations liés à des phénomènes atmosphériques tels que la pluie, les nuages, la scintillation selon l'emplacement géographique et la période de l'année. A titre d'exemple, le modèle de Crane ou les modèles de la recommandation P618-8 de l'UIT (Union Internationale des Télécommunications) peuvent être notamment employés. A noter que rien n'empêche, pour déterminer la largeur de bande de la première portion de la bande montante, de prendre aussi en compte d'autres facteurs d'atténuations, tel que la variation du gain d'antenne en fonction des positions des terminaux dans chaque faisceau.

Avantageusement et selon l'invention, le modèle statistique d'atténuation est un modèle statistique des risques de pluies en fonction de positions géographiques et de périodes de l'année.

Avantageusement et selon l'invention, le risque estimé d'atténuation est déterminé en fonction :

- du nombre de liaisons montantes atténuées desdits faisceaux auxquels est attribuée la bande montante, et
- du nombre total de liaisons montantes desdits faisceaux auxquels est attribuée la bande montante.

Avantageusement et selon l'invention, une deuxième portion de la bande montante correspond notamment à des liaisons montantes du faisceau dont les densités spectrales de puissances, en réception par le satellite multifaisceau, ne sont pas inférieures au seuil de puissance.

En particulier, des liaisons montantes atténuées peuvent être placées dans cette deuxième portion dans le cas où la première portion ne présente pas une largeur de bande suffisante pour pouvoir contenir toutes les bandes de liaisons des liaisons atténuées d'un faisceau.

Avantageusement et selon l'invention, la première portion et la deuxième portion occupent conjointement la totalité de la largeur de bande de la bande montante.

Avantageusement et selon l'invention, le satellite multifaisceau comporte au moins un équipement de bord adapté pour réaliser un traitement des transmissions reçues par le satellite sur au moins une bande de fréquences, dite bande de traitement.

Avantageusement et selon l'invention :

- la première portion de la bande montante est déterminée de manière à être au moins en partie incluse dans la bande de traitement,
- les transmissions incluses dans la bande de traitement sont régénérées à bord du satellite multifaisceau avant leur retransmission vers le sol.

Avantageusement et selon l'invention, les transmissions incluses dans la bande de traitement font l'objet d'un traitement d'interférences à bord du satellite multifaisceau avant leur retransmission vers le sol.

En particulier, ce traitement d'interférences peut être un traitement de détection multi-utilisateur notamment un traitement par annulation parallèle d'interférences (PIC), un traitement par annulation sérielle d'interférences (SIC) ou un traitement par combinaison linéaire de signaux.

Avantageusement et selon l'invention, le classement en fréquence des liaisons montantes et l'attribution des bandes de liaisons des liaisons montantes sont réitérés périodiquement.

D'autres caractéristiques, buts et avantages de l'invention apparaîtront à la lecture de la description suivante qui se réfère aux figures annexées dans lesquelles :

- la figure 1 est un schéma illustrant des liaisons montantes de terminaux terrestres situés dans des zones terrestres couvertes par des faisceaux, d'un satellite multifaisceau, correspondant à une même couleur,
- la figure 2 est un schéma illustrant une partie d'un réseau de transmission de données par satellite dans un exemple de mise en oeuvre de l'invention, dans laquelle une voie de transmission de données, dite voie retour, depuis des terminaux terrestres vers une station de réception d'un réseau, est mise en oeuvre,
- la figure 3 est un schéma illustrant une division en deux portions, telle que prévue dans l'exemple de mise en oeuvre de l'invention, de bandes de fréquences, dites bandes montantes, attribuées à des faisceaux du satellite multifaisceau,
- la figure 4 est un tableau illustrant une répartition, dans l'exemple de mise en oeuvre de l'invention, de liaisons montantes en deux catégories selon une comparaison de valeurs de densité spectrale de puissance de ces liaisons montantes par rapport à un seuil de densité spectrale de puissance,
- la figure 5 est un schéma illustrant l'attribution de fenêtres de transmissions d'une supertrame selon l'exemple de mise en oeuvre de l'invention, aux liaisons montantes de la figure 4 selon les valeurs de densité spectrale de puissance de ces liaisons montantes.

Dans les figures, les échelles et les proportions ne sont pas strictement respectées, et ce à des fins d'illustration et de clarté.

A titre d'exemple non limitatif, l'invention peut être mise en oeuvre dans un réseau de transmission de données par satellite permettant la mise en oeuvre d'un service de communication interactive de données par satellite.

Dans cet exemple de mise en oeuvre de l'invention, le réseau comprend notamment des terminaux 4 terrestres et un satellite de télécommunication à plusieurs faisceaux, dit satellite 5 multifaisceau, formant des champs (non représentés) et des zones 8 de couverture dans lesquelles sont situés les terminaux 4 terrestres. Dans l'exemple de mise en oeuvre de l'invention, le satellite 5 multifaisceau est un satellite géostationnaire.

Un tel réseau est susceptible de comporter plusieurs milliers de ces terminaux 4 terrestres. Il est à noter que, par souci de clarté, seulement certains de ces terminaux 4 terrestres sont représentés dans les figures.

En outre, chaque terminal terrestre est de préférence adapté pour pouvoir adapter dynamiquement sa fréquence d'émission dans l'ensemble de la bande 2 montante attribuée au faisceau dans lequel ce terminal transmet en direction du satellite. En pratique, chaque terminal peur être par exemple un terminal compatible DVB-RCS.

Dans l'exemple de mise en oeuvre de l'invention, une bande de fréquences dite bande 2 montante, est attribuée à chaque faisceau en vue de la transmission radiofréquence des liaisons 3 montantes, vers le satellite, de terminaux 4 terrestres situés dans le champ du faisceau. Dans l'exemple de mise en oeuvre de l'invention, les liaisons 3 montantes sont multiplexées en fréquence dans la bande 2 montante.

Dans cet exemple, chaque faisceau se voit attribué une bande 2 montante choisie parmi deux bandes de fréquences distinctes. En général, ces bandes 2 montantes peuvent appartenir aux bandes Ku, Ka, Q ou V.

En outre, dans cet exemple, chaque faisceau correspond à l'un de deux sens orthogonaux de polarisation.

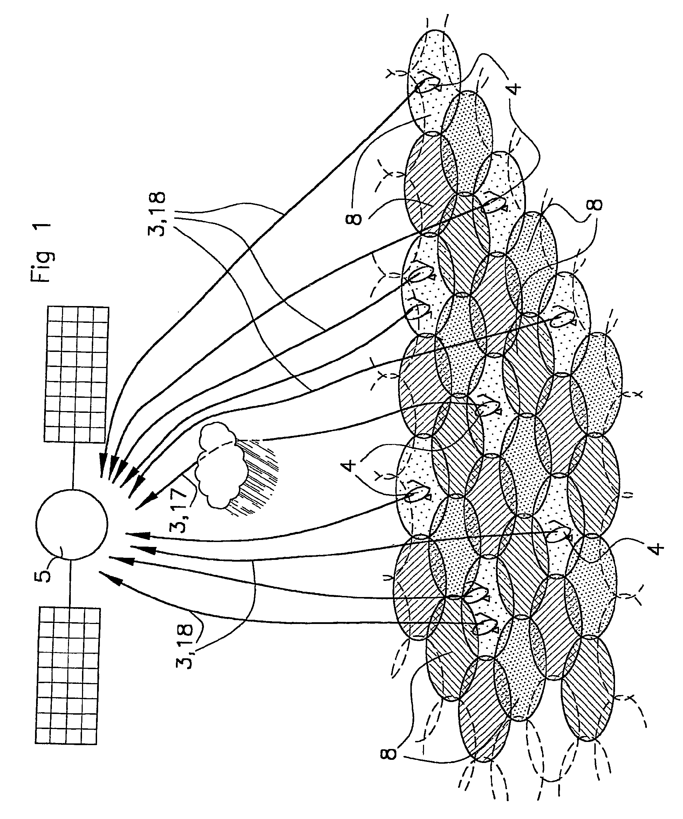

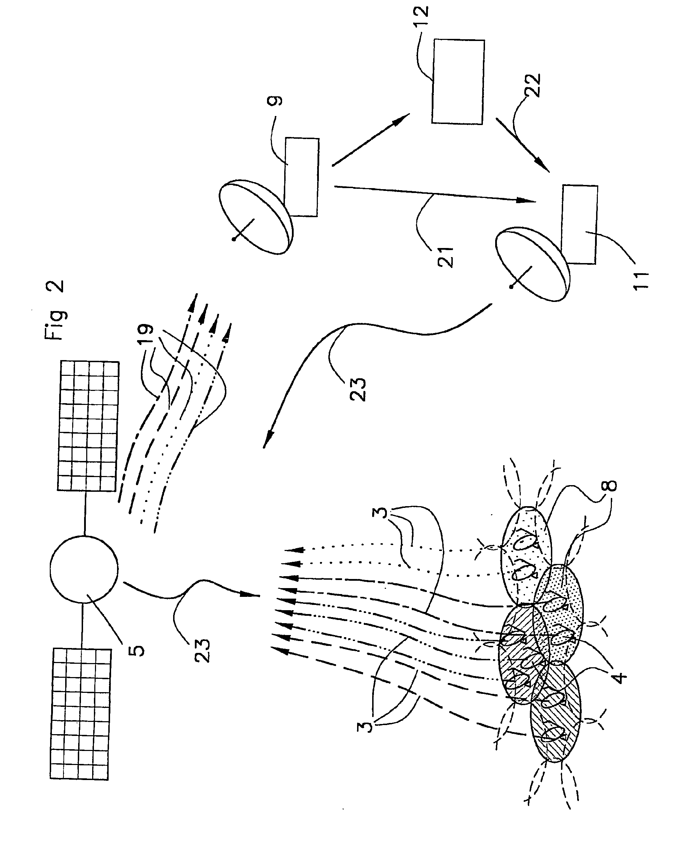

Tel qu'illustré dans les figures 1 et 2, le satellite 5 multifaisceau de cet exemple correspond à un schéma de couleurs suivant un motif à quatre couleurs. Les transmissions dans chaque faisceau du satellite étant polarisées dans l'un des deux sens orthogonaux de polarisation :

- une première couleur correspond à une première bande 2 montante et au sens vertical de polarisation,
- une deuxième couleur correspond à la première bande 2 montante et au sens horizontal de polarisation,
- une troisième couleur correspond à une deuxième bande 2 montante, distincte de la première bande 2 montante, et au sens vertical de polarisation,
- une quatrième couleur correspond à la deuxième bande 2 montante et au sens horizontal de polarisation.

Tel qu'illustré dans la figure 1, le schéma de couleurs associe une des quatre couleurs à chaque faisceau d'un motif de quatre faisceaux adjacents, chaque faisceau d'un motif étant ainsi associé à une couleur différente de celles des autres faisceaux de ce motif. Une couleur est ainsi associée à chaque faisceau du satellite de sorte que les faisceaux d'une même « couleur » soient non adjacents.

Le réseau de l'exemple comporte une station terrestre de réception, dite station 9 de réception, pour chacun des motifs de faisceaux du satellite. Chacune des stations de réception est affectée à la réception de données transmises par des terminaux 4 terrestres situés dans les champs des quatre faisceaux du motif correspondant. Ces données sont transmises depuis les terminaux 4 terrestres vers la station 9 réceptrice au moyen de liaisons 3 montantes depuis ces terminaux terrestres vers le satellite 5 multifaisceau et de liaisons descendantes 19 depuis le satellite 5 multifaisceau vers la station 9 de réception au sol. Ces liaisons 3 montantes et liaisons 19 descendantes permettent l'établissement d'une voie retour de transmission de données. Dans le présent exemple de mise en oeuvre de l'invention, cette voie retour est conforme à la norme DVB-RCS.

En outre, rien n'empêche que des stations réceptrices soient chacune affectées à la réception de données transmises par les terminaux d'un ou plusieurs faisceau(x) appartenant ou non à un même motif de faisceaux. Notamment, rien n'empêche qu'une seule station réceptrice permette la réception des données transmises par l'ensemble des terminaux du réseau.

En pratique, la station 9 de réception peut être toute station de réception adaptée au satellite multifaisceau.

Les données transmises par les terminaux vers la station réceptrice peuvent notamment comprendre des données de commandes interactives effectuées par l'utilisateur d'un terminal terrestre. En outre ces données peuvent comprendre des données de signalisation de la voie retour tel que prévu dans la norme DVB-RCS, notamment :

- des requêtes de capacité, conformément à la norme DVB-RCS, soit :

  - des requêtes de débit,
  - des requêtes de volume,
  - des requêtes de volume cumulé,

- des messages de contrôle et de gestion, tel que des messages de réussites de connexions ou des requêtes de déconnexions,
- des identifiants de connexions,
- des identifiants de groupes.

En outre, ces données peuvent être émises par l'utilisateur à destination d'un réseau, tel que par exemple le réseau Internet (non représenté), relié à une station 11 terrestre d'émission. Ainsi, par exemple, des requêtes d'ouverture de pages Internet, des images numériques ou autres, peuvent constituer de telles données. Une transmission 21 de ces données peut être réalisée entre la station 9 de réception et la station 11 d'émission, par exemple à l'aide de moyens filaires traditionnels de transmission de données.

Dans l'exemple de mise en oeuvre de l'invention, la station 11 d'émission est adaptée pour transmettre des données à destination des terminaux 4 terrestres situés dans les zones 8 de couverture du satellite 5 multifaisceau. Ces données sont communiquées aux terminaux 4 terrestres situés dans les zones 8 de couverture du satellite 5 multifaisceau au moyen d'une transmission 23 émise depuis la station 11 d'émission sur une voie de transmission radiofréquence, dite voie aller, puis diffusée par le satellite 5 multifaisceau vers les terminaux 4 terrestres. Dans l'exemple de mise en oeuvre de l'invention, la voie aller est réalisée conformément à la norme DVB-RCS avec une couche physique suivant la norme « diffusion vidéo numérique - satellite », dite norme DVB-S ou DVB-S2.

En pratique, la station 11 d'émission peut être toute station d'émission adaptée au satellite multifaisceau.

Il est à noter que rien n'empêche que le réseau comporte une pluralité de stations d'émission réalisant chacune des émissions à destination d'une partie des terminaux terrestres. En outre, en alternative, une ou plusieurs stations terrestres peuvent réaliser à la fois l'émission et la réception de données avec tout ou partie des terminaux terrestres du réseau.

Les données transmises par la station 11 d'émission peuvent notamment être des données de type vidéo, des données de type audio ou autres. En outre, ces données peuvent comprendre des données pour paramétrer les voies retour tel que prévu dans la norme DVB-RCS, notamment :

- une table de composition de supertrames, dite table SCT, pour chaque voie retour,
- une table de composition de trames, dite table FCT, pour chaque voie retour,
- une table de composition de « slots », dite table TCT, pour chaque voie retour,
- une table de planification de « bursts » de chaque terminal, dite table TBTP, pour chaque voie retour.

Le réseau de l'exemple comporte un centre 12 de contrôle du réseau réalisant des fonctions de gestion et de contrôle du réseau. Le centre 12 de contrôle réalise notamment une fonction de gestion de l'accès de chaque voie retour. Tel que prévu dans la norme DVB-RCS, la méthode d'accès employée dans l'infrastructure de l'exemple est une méthode d'accès de type à accès multiples par répartition en fréquence et par répartition dans le temps, dite méthode d'accès MF-TDMA.

En pratique le centre 12 de contrôle peut être un ordinateur, dit serveur de contrôle, comportant une unité centrale et une mémoire vive, relié aux stations d'émissions et aux stations de réception par des moyens filaires traditionnels (non représentés) de transmission de données.

Dans cet exemple de mise en oeuvre de l'invention, le centre 12 de contrôle comporte, pour chaque faisceau, un module de segmentation définissant, une segmentation dans le domaine temporel et le domaine fréquentiel de trames, dites supertrames selon la nomenclature de la norme DVB-RCS, à transmettre successivement dans la bande 2 montante du faisceau.

Chaque module de segmentation peut être réalisé sous forme d'un programme chargé en mémoire vive du serveur de contrôle.

Dans l'exemple de mise en oeuvre de l'invention, le module de segmentation définit pour chaque supertrame une division de la bande 2 montante en sous bandes de fréquences, dites bandes 1 de liaisons, en vue d'un multiplexage en fréquence de liaisons 3 montantes à transmettre dans le faisceau. En outre, le module de segmentation divise l'accès à chaque bande 1 de liaison en créneaux 16 temporels. Des fenêtres 20 de transmission, chacune définie par la largeur de bande d'une bande 1 de liaison et un créneau temporel de cette bande 1 de liaison, constitue des unités élémentaires d'attribution de capacité de transmission de la voie retour. Conformément à la norme DVB-RCS, chacune de ces fenêtres 20 de transmission, appelées « slots » dans la norme DVB-RCS, est décrite, dans les tables SCT, FCT et TCT, par une fréquence centrale, une largeur de bande, un instant de début et une durée.

Dans l'exemple de mise en oeuvre de l'invention, la méthode d'accès employée pour les voies retour est une méthode d'accès de type MF-TDMA fixe. Dans une telle méthode d'accès, les fenêtres 20 de transmission d'une supertrame destinées à transmettre des données de trafic présentent toutes une même dimension dans le domaine fréquentiel et dans le domaine temporel. Ainsi, dans l'exemple de mise en oeuvre de l'invention, les bandes de liaisons de la bande montante d'un faisceau présentent une même largeur de bande.

Dans l'exemple de mise en oeuvre de l'invention, une modulation QPSK (modulation par déplacement de phase en quadrature) est employée pour les transmissions dans les fenêtres 20 de transmission.

Il est à noter que rien n'empêche, en alternative, de mettre en oeuvre l'invention dans un réseau dont la méthode d'accès employée pour les voies retour est une méthode d'accès MF-TDMA dynamique. Dans un tel cas, les fenêtres 20 de transmission d'une supertrame destinées à transmettre des données de trafic pourraient comporter des dimensions différentes dans le domaine temporel et des dimensions différentes dans le domaine fréquentiel. Une telle méthode d'accès permet une transmission plus efficace de divers types de contenus (audio, vidéo, données etc.). Dans un tel cas, les bandes 1 de liaisons de la bande 2 montante d'un faisceau pourraient comporter des largeurs de bandes différentes.

Par ailleurs, pour une méthode d'accès de type MF-TDMA dynamique, le module de segmentation est de préférence adapté pour déterminer, de manière traditionnelle pour chaque fenêtre 20 de transmission de la supertrame, un type de modulation, un taux de codage ainsi qu'un débit à employer dans la fenêtre 20 de transmission.

De préférence, le type de modulation, le taux de codage et le débit de chaque fenêtre 20 de transmission sont déterminés en fonction de bilans de puissances réalisés pour les liaisons montantes du faisceau correspondant. Ce bilan de puissance correspond à une évaluation du rapport, dit C/(No+Io), de la puissance de la porteuse de la liaison montante sur la puissance cumulée des interférences et du bruit pour cette liaison montante. En pratique l'évaluation de C/(No+Io) peut être réalisée en sortie d'un démodulateur par des mesures de distances dans la constellation I/Q (ou I représente la voie en phase et Q représente la voie en quadrature). En outre, l'évaluation de C/(No+Io) peut être réalisée par mesure du taux d'erreur binaire ou du taux d'erreur de paquets de données. Par ailleurs, l'évaluation de C/(No+Io) peut être réalisée en utilisant l'évolution des métriques d'un décodeur. Ce type de mesure est disponible en standard dans les récepteurs DVB-RCS tels que les récepteurs DVB-RCS produits par les sociétés EMS Technologies (Atlanta, Etats-Unis d'Amérique) et Newtec (Sint-Niklaas, Belgique).

Le type de modulation peut notamment être choisi parmi les modulations MPSK (modulations de phase à M états), MQAM (modulations d'amplitude en quadrature à M états) et MAPSK (modulations de phase et d'amplitude à M états).

Dans l'exemple de mise en oeuvre de l'invention, les fenêtres 20 de transmission situées dans une première portion, décrites ci-après, de la bande montante, sont associées à un taux de codage faible, par exemple un taux de codage de 1/2. En outre, les fenêtres 20 de transmission situées dans une deuxième portion, décrites ci-après, de la bande montante sont associées à un taux de codage élevé, par exemple un taux de codage de 4/5.

Le module de segmentation s'exécute par itérations successives dans chacune desquelles il est adapté pour effectuer, pour chaque faisceau de la voie retour, une planification des fenêtres 20 de transmission de supertrames à transmettre les unes à la suite des autres.

Le module de segmentation peut réaliser un enregistrement des tables SCT, FCT et TCT prévues par la norme DVB-RCS, afin de mémoriser et transmettre la planification (i.e. la division du plan temps fréquence de la supertrame en fenêtres, le taux de codage des transmissions de données dans chaque fenêtre...) ainsi réalisée d'une supertrame à transmettre. Une transmission 22 de ces tables, ainsi que de la table TBTP, à la station 9 d'émission correspondante peut être réalisée au moyen des moyens de transmission filaires entre le centre 12 de contrôle et la station 11 d'émission.

Dans l'exemple de mise en oeuvre de l'invention, le centre 12 de contrôle comporte en outre, pour chaque faisceau du satellite multifaisceau, un module, dit module d'attribution, planifiant l'attribution de fenêtres 20 de transmission à des liaisons 3 montantes de terminaux 4 terrestres situés dans le champ du faisceau en vue de la transmission de ces liaisons montantes.

De préférence, ce module d'attribution peut être réalisé sous forme d'un programme chargé en mémoire vive du serveur de contrôle.

Il est à noter que rien n'empêche que le centre 12 de contrôle soit mis en oeuvre au moyen d'un dispositif informatique comportant une pluralité de processeurs, tel qu'une grappe d'ordinateurs ou un calculateur multiprocesseur à architecture parallèle, et que les modules de segmentation et les modules d'attribution soient chargés dans une ou plusieurs mémoire(s) vive(s) du dispositif informatique afin de pouvoir être exécuter par au moins un processeur de ce dispositif informatique.

Rien n'empêche que certains modules d'attribution, ou bien même tous les modules d'attribution, soient réalisés sous forme matérielle au moyen d'un ou d'une pluralité de circuits logiques, ou encore sous forme hybride de la forme matérielle et de la forme logicielle. Aussi, rien n'empêche que les modules de segmentation soient réalisés de la sorte.

Aussi, il est à noter que rien n'empêche que certains modules d'attribution, ou bien tous les modules d'attribution, soient embarqués, sous forme logicielle et/ou matérielle, à bord du satellite multifaisceau. Rien n'empêche non plus que certains modules de segmentation, ou bien tous les modules de segmentation, soient embarqués, sous forme logicielle et/ou matérielle, à bord du satellite multifaisceau.

Aussi, rien n'empêche que le centre de contrôle du réseau soit réalisé au moyen d'une pluralité de dispositifs informatiques géographiquement répartis, tels que des ordinateurs, permettant chacun l'exécution du module de segmentation et du module d'attribution d'au moins un faisceau du satellite multifaisceau.

La planification de l'attribution de fenêtres 20 de transmission peut être réalisée périodiquement en vue de la planification de l'attribution de fenêtres 20 de transmission de chaque supertrame. Dans l'exemple de mise en oeuvre de l'invention, chaque itération de cette planification de l'attribution de fenêtres 20 de transmission est réalisée en fonction de valeurs mesurées, dites valeurs PM, des puissances des liaisons 3 montantes du faisceau correspondant.

Ces valeurs PM sont de préférence obtenues périodiquement par le module d'attribution, par exemple selon une période, dite période de mesure, d'une durée de dix supertrames. De préférence, la valeur PM correspond à une valeur de puissance moyenne sur la période de mesure.

En pratique, chaque valeur PM peut être mesurée pendant la période de mesure au niveau de l'antenne de la station 9 de réception correspondant au faisceau de la supertrame. En effet, les valeurs PM ainsi mesurées pour chaque liaison montante d'un faisceau sont représentatives des puissances de ces liaisons montantes en réception par le satellite multifaisceau.

Dans l'exemple de mise en oeuvre de l'invention, le module d'attribution réalise une étape de calcul dans laquelle une valeur de mesure, dite *DSPM,* de la densité spectrale de puissance d'une liaison montante est déterminée à chaque nouvelle valeur PM de cette liaison montante. Cette mesure de la densité spectrale de puissance peut être obtenue selon la formule suivante :

$$DSPM = \frac{PM}{LB}$$

où :

- LB représente la largeur moyenne de la bande 1 de liaison occupée par la transmission de la liaison montante pendant la période de mesure.

En particulier la valeur de *LB* peut être celle employée pour déterminer les tables SCT, FCT, TCT et TBTP tel que prévu dans la norme DVB-RCS.

En outre, le module d'attribution effectue, pour chaque planification de l'attribution de fenêtres 20 de transmission d'une supertrame, une évaluation de la densité spectrale de puissance qu'est susceptible de présenter chaque liaison montante de la voie retour pendant la transmission d'une supertrame ultérieure. Cette valeur estimée de la densité spectrale de puissance, dite *DSPE,* peut être obtenue selon la formule suivante :

$$DSPE = DSPM \frac{PCU}{PC}$$

où :

- *PCU* représente une puissance commandée de la liaison montante pour une supertrame ultérieure,
- *PC* représente une valeur moyenne des puissances commandées de la liaison montante pendant la période de mesure.

Les valeurs *PC* et *PCU* peuvent être déterminées à partir des valeurs de puissances commandées qui sont traditionnellement employées pour déterminer la table CMT (Table de Messages de Correction) prévue dans la norme DVB-RCS.

Dans l'exemple de mise en oeuvre de l'invention, le module d'attribution réalise une étape de classification suite à chaque évaluation des valeurs *DSPE.*

Dans cette étape, le module d'attribution exécute, pour chaque faisceau de la voie retour, un tri des liaisons 3 montantes du faisceau en une première catégorie comprenant les liaisons montantes, dites liaisons 17 montantes atténuées, dont la *DSPE* est inférieure à un seuil de densité spectrale de puissance prédéfini, et une deuxième catégorie comprenant les liaisons 18 montantes dont la *DSPE* est supérieure ou égale au seuil de densité spectrale de puissance.

A titre d'exemple non limitatif, le seuil de densité spectrale de puissance correspond à une puissance inférieure de 0,5 décibels par rapport à la densité spectrale de puissance *DSPM* d'une liaison montante de référence, soit, dans le présent exemple, la liaison montante comportant la *DSPM* la plus élevée parmi les terminaux terrestres des faisceaux de même couleur que le faisceau correspondant au module d'attribution en question.

De préférence, une détermination du seuil de densité spectrale de puissance est réitérée pour chaque couleur après chaque période de mesure en fonction des nouvelles valeurs *DSPM* obtenues par les modules d'attribution.

En pratique, la densité spectrale de puissance *DSPM* maximale obtenue par chaque module d'attribution peut être transmise à tous les autres modules d'attribution, en vue de la détermination du seuil par chacun de ces modules. Ceci peut être réalisé par des moyens traditionnels de communication de données, tels que des fichiers d'échanges de données, dans un ordinateur tel que le serveur de contrôle.

Dans l'exemple de mise en oeuvre de l'invention, le module d'attribution attribue des fenêtres 20 de transmission comprises dans une première portion 6 de la bande 2 montante à chacune des liaisons 17 montantes de la première catégorie.

Par ailleurs, ce module d'attribution attribue des fenêtres 20 de transmission comprises dans une deuxième portion de la bande 2 à chacune des liaisons 18 montantes de la première deuxième catégorie.

Dans l'exemple de mise en oeuvre de l'invention, la largeur de bande de la première bande montante est la même que celle de la deuxième bande montante.

De préférence, pour chacune des quatre couleurs de faisceau, la largeur de bande de la première portion 6 de la bande 2 montante des faisceaux de ladite couleur est déterminée dynamiquement en fonction d'une valeur estimée, dite risque estimé d'atténuation, du risque pour chaque liaison montante des faisceaux de ladite couleur, que cette liaison montante présente une valeur *DSPM* inférieure au seuil de densité spectrale de puissance.

Il est à noter que rien n'empêche, en alternative, de paramétrer statiquement la largeur de bande de la première portion 6 de la bande 2 montante selon un risque estimé d'atténuation, plutôt que de déterminé cette largeur dynamiquement.

Dans l'exemple de mise en oeuvre de l'invention, le risque estimé d'atténuation est déterminé selon un modèle statistique géographique de pluviométrie, tel que celui de la recommandation P618-8 de l'UIT (Union Internationale des Télécommunications). En effet, la pluie produit des atténuations particulièrement importantes lors de la propagation des liaisons montantes dans l'atmosphère.

En pratique, le serveur de contrôle peut exécuter un module d'estimations intégrant le modèle statistique précité au moyen duquel il est adapté pour déterminer, en fonction des positions géographiques des terminaux terrestres de chaque liaison montante, le risque encouru par chaque liaison montante des faisceaux de ladite couleur de présenter une valeur *DSPE* inférieure au seuil de référence.

Similairement aux modules de segmentations et aux modules d'attribution, le module d'estimation peut être réalisé sous forme logicielle, matérielle ou hybride dans un dispositif informatique monoprocesseur ou multiprocesseur, embarqué ou non à bord du satellite 5 multifaisceau.

De préférence, le module d'estimations est réalisé sous forme d'un programme chargé en mémoire du serveur de contrôle.

En pratique, la position géographique peut être déterminée par exemple au moyen du protocole SNMP (protocole simple de gestion de réseau) et de la base de données MIB (base d'informations de gestion) disponible dans le terminal tel que optionnellement prévu dans la norme DVB-RCS.

Dans l'exemple de mise en oeuvre de l'invention, le module d'estimations est adapté pour ensuite calculer la moyenne des risques encourus par ces liaisons montantes. Cette valeur moyenne correspond, dans l'exemple de mise en oeuvre de l'invention, au risque estimé d'atténuation.

En alternative, le risque estimé d'atténuation peut être évalué au moyen des valeurs *DSPM* évaluées pour les liaisons montantes des faisceaux de chaque couleur. En particulier le risque estimé d'atténuation peut être évalué selon la formule suivante :

$$RE = \frac{NLA}{NTL}$$

où :

- *RE* désigne le risque estimé d'atténuation,
- *NLA* désigne le nombre total de liaisons atténuées dans les faisceaux de ladite couleur,
- *NTL* désigne le nombre total de liaisons 3 montantes dans les faisceaux de ladite couleur.

De préférence, la détermination de la largeur de bande de la première portion 6 de chaque bande 2 montante est réitérée après chaque itération de la détermination du seuil de densité spectral de puissance correspondant aux faisceaux de ladite couleur.

Dans l'exemple de mise en oeuvre de l'invention, la deuxième portion 7 occupe le reste de la largeur de bande de la bande 2 montante, c'est-à-dire la portion de la bande montante non occupée par la première portion 6 de la bande 2 montante.

De préférence, la première portion 6 et la deuxième portion 7 de la bande 2 montante sont déterminées de sorte que le rapport du nombre de fenêtres 20 de transmission de la première portion 6 de la bande 2 montante sur le nombre de fenêtres 20 de transmission de la deuxième portion 7 soit le plus près possible de la valeur de risque estimé d'atténuation sans en être inférieur.

Ainsi, dans l'exemple de mise en oeuvre de l'invention, la largeur de bande de la première portion de la bande montante des faisceaux d'une même couleur correspond, en pourcentage de la taille de la largeur de bande de la bande 2 montante, au risque moyen estimé évalué tel que décrit précédemment. A titre illustratif, pour un risque moyen estimé de 0,1 la première portion de la bande montante comporte une largeur de bande ayant le dixième, ou un peu plus, de la taille de la bande montante.

Dans l'exemple de mise en oeuvre de l'invention, le module d'attribution est adapté pour trier les liaisons 3 montantes dans l'ordre de leurs *DSPE* et pour attribuer des fenêtres 20 de transmission de la première portion 6 de la bande 2 montante correspondante de manière à ce que ces liaisons 3 montantes soient réparties en fréquence dans cet ordre.

Le module d'attribution est adapté pour enregistrer la planification de l'attribution des fenêtres 20 de transmission dans la table TBTP. Cette table est communiquée aux terminaux 4 terrestres sur la voie aller afin qu'ils puissent réaliser la transmission des liaisons 3 montantes dans les fenêtres 20 de transmission qui leur ont été attribuées par le module d'attribution.

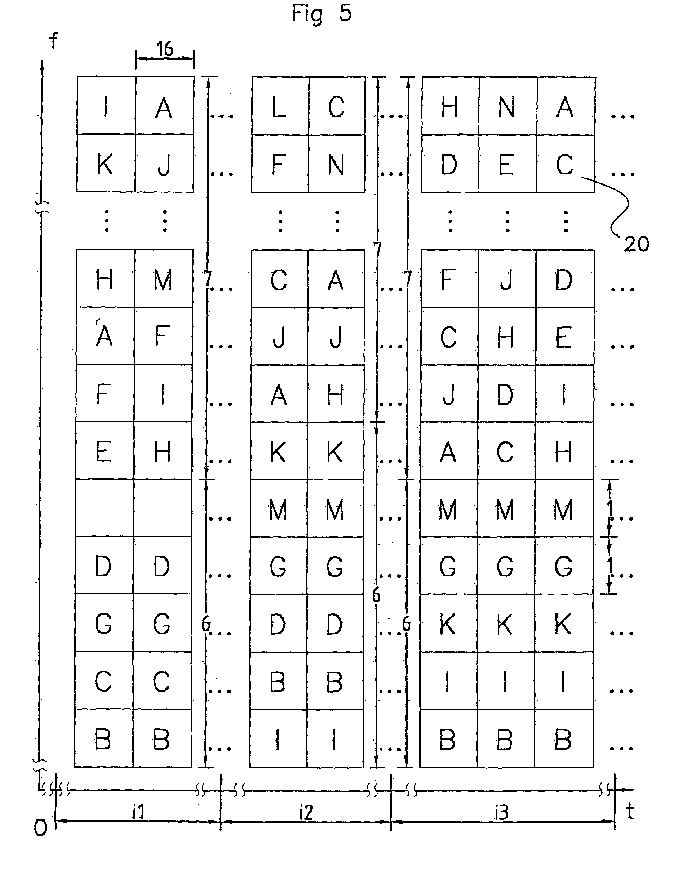

La figure 5 est un exemple d'attribution dynamique, conformément à l'exemple de mise en oeuvre de l'invention, de fenêtres 20 de transmission d'une supertrame, à quatorze liaisons montantes désignées par les lettres A, B, C, D, E, F, G, H, I, J, K, L, M, N.

Il est à noter qu'en pratique chaque faisceau du satellite est susceptible de comporter un plus grand nombre de liaisons montantes. Cet exemple est donné à titre illustratif avec un nombre restreint de liaisons montantes par souci de concision et de clarté. Aussi, seule une partie des fenêtres de transmission de la supertrame est illustrée à la figure 5. En pratique, une telle supertrame est en effet susceptible de comporter un grande quantité de fenêtres 20 de transmission qu'il serait fastidieux de représenter.

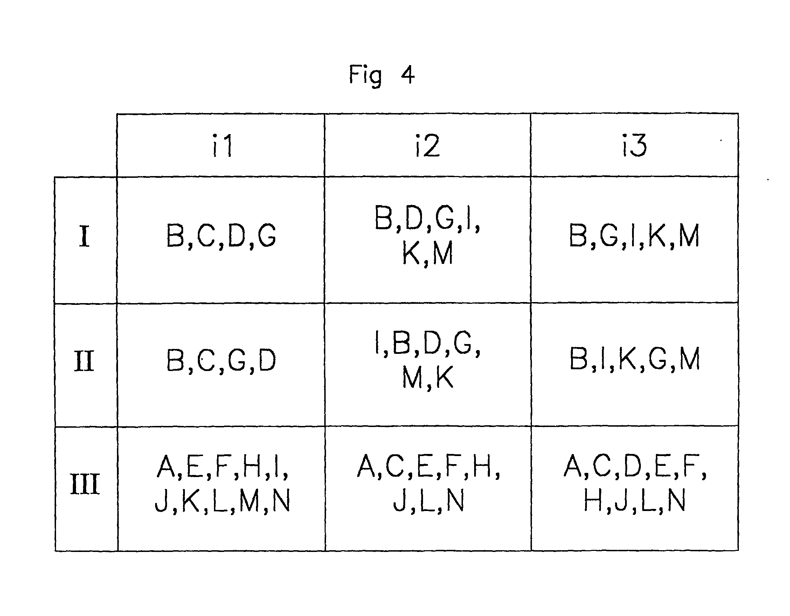

Le tableau de la figure 4 illustre la répartition effectuée par le module d'attribution, pour trois intervalles de temps $i_1$, $i_2$, $i_3$ successifs, des liaisons montantes A, B, C, D, E, F, G, H, I, J, K, L, M, N, entre une première catégorie, occupant la ligne I du tableau, et une deuxième catégorie, occupant la ligne III du tableau, de liaisons montantes. Cette répartition est effectuée à chaque intervalle en fonction de valeurs *DSPE,* correspondant à l'intervalle, évaluées pour une période de mesure antérieure à l'intervalle.

En outre, le classement par le module d'attribution des liaisons montantes de la première catégorie dans l'ordre croissant de leurs *DSPE* est illustré, à la ligne II du tableau de la figure 4, pour chaque intervalle de temps $i_1$, $i_2$, $i_3$.

Tel qu'illustré dans la figure 5, des fenêtres 20 de transmission appartenant à la première portion 6 de la bande 2 montante sont chacune attribuées à une liaison montante appartenant à la première catégorie. En outre, cette attribution est réalisée de sorte à répartir en fréquence les liaisons montantes de la première catégorie dans l'ordre du classement réalisé par le module d'attribution tel qu'illustré dans le tableau de la figure 4.

Tel qu'illustré dans la figure 5, certaines fenêtres 20 de transmission peuvent rester non attribuées dans le cas où il existe trop peu de liaisons atténuées par rapport au nombre de bandes de liaisons dans la première portion 6 de la bande 2 montante à un instant donné.

Tel qu'illustré dans la figure 5, des fenêtres 20 de transmission appartenant à la deuxième portion 7 de la bande 2 montante sont attribuées à des liaisons montantes appartenant à la deuxième catégorie. Dans l'exemple de mise en oeuvre de l'invention, cette attribution est réalisée sans contrainte particulière de classement en fréquence de ces liaisons montantes.

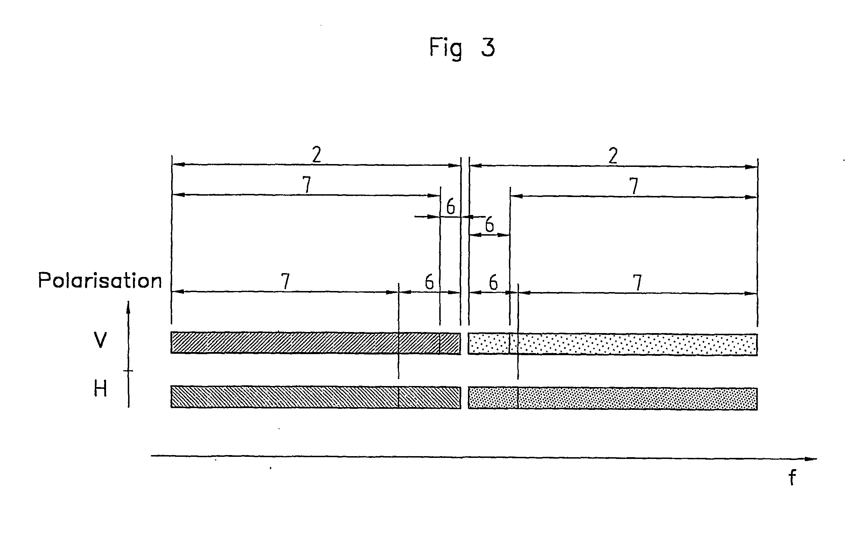

Tel qu'illustré à la figure 3, les premières portions 6 de la première bande 2 montante et de la deuxième bande 2 montante sont de préférence définies de manière à comporter des fréquences voisines. Ceci permet d'éviter d'éventuelles interférences entre des liaisons proches en fréquence et ayant des densités spectrales de puissances éloignées.

Tel qu'illustré à la figure 3, des liaisons 17 montantes atténuées de deux faisceaux correspondant à une même bande 2 montante mais à des sens de polarisation différents peuvent être transmises dans une même portion de la bande 2 montante de sorte à limiter l'impact d'éventuelles interférences entre les liaisons 3 montantes de ces faisceaux en raison d'une mauvaise discrimination de ces liaisons 3 montantes en réception selon leurs sens de polarisation.

En outre, un traitement régénératif des liaisons 3 montantes peut être mis en oeuvre à bord du satellite de sorte à améliorer le bilan de liaison de ces signaux $(C/(N_o+I_o))$ et notamment à gagner sur le bruit thermique. En pratique ceci peut être réalisé au moyen de plusieurs équipements embarqués à bord du satellite multifaisceau, chacun adapté pour réaliser un traitement régénératif de signaux dans une bande de fréquences, dite bande de traitement régénératif. Notamment, ces équipements de bord peuvent correspondre à la charge utile régénérative développée par la société Alcatel Space (Valence, France) dans le cadre du projet AMERHIS de l'Agence Spatiale Européenne (Paris, France). De préférence, chaque première portion de bande montante est déterminée de façon à occuper tout ou partie de la bande de traitement régénératif d'un équipement de bord. Ainsi, les équipements de bord réalisent le traitement régénératif pour les liaisons 17 atténuées. Ceci nécessite moins de ressources qu'un traitement effectué pour toutes les liaisons montantes.

En outre, des équipements de bord du satellite 5 multifaisceau peuvent réaliser un traitement des interférences sur une ou plusieurs sous bandes de fréquences de la première et de la deuxième bande montante. Par exemple, ces traitements peuvent consister à détecter, en comparant ces liaisons 17 montantes atténuées entre-elles (par exemple par intercorrélation de ces liaisons 17 montantes atténuées), et soustraire d'éventuelles composantes interférentes co-fréquences présentes dans les liaisons 17 montantes atténuées. En alternative ou en combinaison, ces traitements d'interférences peuvent être appliqués sur des bandes de liaisons des liaisons montantes à forte densité spectrale de puissance *DSPM.* En pratique, ces traitements d'interférences peuvent être réalisés au moyen de modules PIC (annulation parallèle d'interférences), SIC (annulation sérielle d'interférences) ou de combinaisons linéaires des signaux.

L'introduction de ce traitement d'interférences au niveau du satellite dans chaque voie retour entre les terminaux 4 terrestres et les stations 9 réceptrices permet de gagner sur les interférences produites sur les liaisons 17 montantes atténuées pendant leurs transmissions radiofréquences entre les terminaux 4 terrestres et le satellite 5 multifaisceau.

Il est possible de ne pas effectuer le contrôle de puissance. Dans ce cas, la formule suivante peut être employée pour calculer les *DSPE* des liaisons 3 montantes :

$$DSPE = DSPM = \frac{PM}{LB}$$

Dans une première variante non représentée de l'invention, les liaisons 17 montantes atténuées sont réparties d'une manière quelconque (sans considération pour les DSPE de ces liaisons 17 montantes atténuées) à l'intérieur des premières portions 6 des bandes 2 montantes.

Dans une deuxième variante non représentée de l'invention, le module d'attribution peut être adapté pour attribuer des fenêtres 20 de transmission aux liaisons 3 montantes de chaque faisceau de sorte à répartir ces liaisons montantes en fréquence, dans les bandes 2 montantes correspondantes, dans l'ordre des valeurs *DSPE* calculées.

Selon une troisième variante non représentée de l'invention, les liaisons 3 montantes peuvent être réparties selon leurs valeurs *DSPE* calculées parmi plus de deux portions pour chaque bande 2 montante.

Il est à noter que rien n'empêche de mettre en oeuvre l'invention dans un réseau de transmission de données par satellite dont l'accès à la voie retour est mis en oeuvre selon une autre méthode d'accès que la méthode MF-TDMA fixe. En particulier cette méthode peut être toute autre méthode permettant un accès multiple par répartition en fréquence.

Dans le cas où cette méthode est une méthode de type MF-TDMA dynamique, la valeur estimée de la densité spectrale de puissance *DSPE* peut être obtenue selon la formule suivante :

$$DSPE = DSPM \cdot \frac{LB}{LBU} \cdot \frac{PCU}{PC}$$

où LBU représente la largeur de la bande 1 de liaison devant être occupée par la transmission de la liaison montante pour une supertrame ultérieure. La valeur *LBU* peut être celle employée pour déterminer les tables SCT, FCT, TCT et TBTP conformément à la norme DVB-RCS.

## Revendications

1. Procédé d'attribution dynamique de sous bandes, dites bandes (1) de liaisons, d'au moins une bande de fréquences, dite bande (2) montante, à des liaisons (3) radiofréquences montantes de terminaux (4) terrestres vers un satellite de télécommunication à plusieurs faisceaux, dit satellite (5) multifaisceau, **caractérisé en ce que**, pour chaque faisceau d'au moins deux faisceaux auxquels est attribuée une même bande (2) montante pour la transmission de liaisons (3) montantes dans ces faisceaux, des bandes (1) de liaisons sont attribuées aux liaisons (3) montantes de ce faisceau selon un classement en fréquence de ces liaisons (3) montantes établi en fonction des densités spectrales de puissances, en réception par le satellite (5) multifaisceau, de ces liaisons (3) montantes.

2. Procédé selon la revendication 1, **caractérisé en ce que** le classement consiste au moins pour partie à répartir en fréquence une pluralité de liaisons (3) montantes du faisceau dans l'ordre de leurs densités spectrales de puissances en réception par le satellite (5) multifaisceau.

3. Procédé selon l'une des revendications 1 ou 2, **caractérisé en ce que** le classement consiste au moins pour partie à répartir les liaisons (3) montantes du faisceau parmi une pluralité de portions de la bande (2) montante en fonction des densités spectrales de puissances, en réception par le satellite (5) multifaisceau, des liaisons (3) montantes du faisceau.

4. Procédé selon la revendication 3, **caractérisé en ce qu'**une première portion (6) de la bande (2) montante correspond à des liaisons montantes, dites liaisons (17) atténuées, dont les densités spectrales de puissances en réception par le satellite (5) multifaisceau sont inférieures à un seuil de densité spectrale de puissance.

5. Procédé selon les revendications 2 et 4, **caractérisé en ce que** le classement consiste au moins pour partie à répartir en fréquence les liaisons (17) atténuées dans l'ordre de leurs densités spectrales de puissances, en réception par le satellite (5) multifaisceau, dans la première portion (6) de la bande (2) montante.

6. Procédé selon l'une des revendications 4 ou 5, **caractérisé en ce que** le seuil de densité spectrale de puissance correspond à une puissance inférieure d'au moins 0,5 décibel par rapport à la densité spectrale de puissance, en réception par le satellite (5) multifaisceau, d'une liaison (18) montante de référence.

**7.** Procédé selon la revendication 6, **caractérisé en ce que** la liaison montante comportant la densité spectrale de puissance la plus élevée parmi les liaisons montantes desdits faisceaux auxquels est attribuée la bande (2) montante, est choisie comme liaison montante de référence.

**8.** Procédé selon l'une des revendications 4 à 7, **caractérisé en ce que** la largeur de bande de la première portion (6) est déterminée en fonction d'une valeur estimée, dite risque estimé d'atténuation, du risque, pour chaque liaison montante desdits faisceaux auxquels est attribuée la bande (2) montante, que cette liaison montante présente une densité spectrale de puissance, en réception par le satellite (5) multifaisceau, inférieure au seuil de densité spectrale de puissance.

**9.** Procédé selon la revendication 8, **caractérisé en ce que** le risque estimé d'atténuation est déterminé selon au moins un modèle statistique d'atténuation.

**10.** Procédé selon la revendication 9, **caractérisé en ce que** le modèle statistique d'atténuation est un modèle statistique des risques de pluies en fonction de positions géographiques et de périodes de l'année.

**11.** Procédé selon la revendication 8, **caractérisé en ce que** le risque estimé d'atténuation est déterminé en fonction :

- du nombre de liaisons montantes atténuées desdits faisceaux auxquels est attribuée la bande (2) montante, et
- du nombre total de liaisons montantes desdits faisceaux auxquels est attribuée la bande (2) montante.

**12.** Procédé selon l'une des revendications 4 à 11, **caractérisé en ce qu'**une deuxième portion (7) de la bande (2) montante correspond notamment à des liaisons (18) montantes du faisceau dont les densités spectrales de puissances, en réception par le satellite (5) multifaisceau, ne sont pas inférieures au seuil de puissance.

**13.** Procédé selon la revendication 12, **caractérisé en ce que** la première portion (6) et la deuxième portion (7) occupent conjointement la totalité de la largeur de bande de la bande (2) montante.

**14.** Procédé selon l'une des revendications 1 à 13, **caractérisé en ce que** le satellite (5) multifaisceau comporte au moins un équipement de bord adapté pour réaliser un traitement des transmissions reçues par le satellite sur au moins une bande de fréquences, dite bande de traitement.

**15.** Procédé selon les revendications 4 et 14, **caractérisé en ce que** :

- la première portion de la bande (6) montante est déterminée de manière à être au moins en partie incluse dans la bande de traitement,
- les transmissions incluses dans la bande de traitement sont régénérées à bord du satellite (5) multifaisceau avant leur retransmission vers le sol.

**16.** Procédé selon l'une des revendications 14 ou 15, **caractérisé en ce que** les transmissions incluses dans la bande de traitement font l'objet d'un traitement d'interférences à bord du satellite (5) multifaisceau avant leur retransmission vers le sol.

**17.** Procédé selon l'une des revendications 1 à 16, **caractérisé en ce que** le classement en fréquence des liaisons (3) montantes et l'attribution des bandes (1) de liaisons des liaisons (3) montantes sont réitérés périodiquement.

**18.** Procédé selon l'une des revendications 1 à 17, **caractérisé en ce que** les faisceaux auxquels est attribuée une même bande (2) montante sont non adjacents.

**19.** Réseau de transmission de données par satellite comprenant des moyens d'attribution dynamique de sous bandes, dites bandes (1) de liaisons, d'au moins une bande de fréquences, dite bande (2) montante, à des liaisons (3) radiofréquences montantes de terminaux (4) terrestres vers un satellite de télécommunication à plusieurs faisceaux, dit satellite (5) multifaisceau, **caractérisé en ce que**, pour chaque faisceau d'au moins deux faisceaux auxquels est attribuée une même bande (2) montante pour la transmission de liaisons (3) montantes dans ces faisceaux, les moyens d'attribution dynamique sont adaptés pour réaliser :

- au moins un classement en fréquence des liaisons (3) montantes de ce faisceau en fonction des densités spectrales de puissances, en réception par le satellite (5) multifaisceau, de ces liaisons (3) montantes,
- une attribution des bandes (1) de liaisons à ces liaisons (3) montantes en fonction de ce classement.

**20.** Réseau selon la revendication 19, **caractérisé en ce que** le classement consiste au moins pour partie à répartir en fréquence une pluralité de liaisons (3) montantes du faisceau dans l'ordre de leurs densités spectrales de puissances en réception par le satellite (5) multifaisceau.

21. Réseau selon l'une des revendications 19 ou 20, **caractérisé en ce que** le classement consiste au moins pour partie à répartir les liaisons (3) montantes du faisceau parmi une pluralité de portions de la bande (2) montante en fonction des densités spectrales de puissances, en réception par le satellite (5) multifaisceau, des liaisons (3) montantes du faisceau.

22. Réseau selon la revendication 21, **caractérisé en ce qu'**une première portion (6) de la bande (2) montante correspond à des liaisons montantes, dites liaisons (17) atténuées, dont les densités spectrales de puissances en réception par le satellite (5) multifaisceau sont inférieures à un seuil de densité spectrale de puissance.

23. Réseau selon les revendications 20 et 22, **caractérisé en ce que** le classement consiste au moins pour partie à répartir en fréquence les liaisons (17) atténuées dans l'ordre de leurs densités spectrales de puissances, en réception par le satellite (5) multifaisceau, dans la première portion (6) de la bande (2) montante.

24. Réseau selon l'une des revendications 22 ou 23, **caractérisé en ce que** le seuil de densité spectrale de puissance correspond à une puissance inférieure d'au moins 0,5 décibel par rapport à la densité spectrale de puissance, en réception par le satellite (5) multifaisceau, d'une liaison (18) montante de référence.

25. Réseau selon la revendication 24, **caractérisé en ce que** la liaison montante comportant la densité spectrale de puissance la plus élevée parmi les liaisons montantes desdits faisceaux auxquels est attribuée la bande (2) montante, est choisie comme liaison montante de référence.

26. Réseau selon l'une des revendications 22 à 25, **caractérisé en ce que** la largeur de bande de la première portion (6) est déterminée en fonction d'une valeur estimée, dite risque estimé d'atténuation, du risque, pour chaque liaison montante desdits faisceaux auxquels est attribuée la bande (2) montante, que cette liaison montante présente une densité spectrale de puissance, en réception par le satellite (5) multifaisceau, inférieure au seuil de densité spectrale de puissance.

27. Réseau selon la revendication 26, **caractérisé en ce que** le risque estimé d'atténuation est déterminé selon au moins un modèle statistique d'atténuation.

28. Réseau selon la revendication 27, **caractérisé en ce que** le modèle statistique d'atténuation est un modèle statistique des risques de pluies en fonction de positions géographiques et de périodes de l'année.

29. Réseau selon la revendication 26, **caractérisé en ce que** le risque estimé d'atténuation est déterminé en fonction :

- du nombre de liaisons montantes atténuées desdits faisceaux auxquels est attribuée la bande (2) montante, et
- du nombre total de liaisons montantes desdits faisceaux auxquels est attribuée la bande (2) montante.

30. Réseau selon l'une des revendications 22 à 29, **caractérisé en ce qu'**une deuxième portion (7) de la bande (2) montante correspond notamment à des liaisons (18) montantes du faisceau dont les densités spectrales de puissances, en réception par le satellite (5) multifaisceau, ne sont pas inférieures au seuil de puissance.

31. Réseau selon la revendication 30, **caractérisé en ce que** la première portion (6) et la deuxième portion (7) occupent conjointement la totalité de la largeur de bande de la bande (2) montante.

32. Réseau selon l'une des revendications 19 à 31, **caractérisé en ce que** le satellite (5) multifaisceau comporte au moins un équipement de bord adapté pour réaliser un traitement régénératif des transmissions reçues par le satellite sur au moins une bande de fréquences, dite bande de traitement.

33. Réseau selon les revendications 22 et 32, **caractérisé en ce que** :

- la première portion de la bande (6) montante est déterminée de manière à être au moins en partie incluse dans la bande de traitement,
- les transmissions incluses dans la bande de traitement sont régénérées à bord du satellite (5) multifaisceau avant leur retransmission vers le sol.

34. Réseau selon l'une des revendications 32 ou 33, **caractérisé en ce que** les transmissions incluses dans la bande de traitement font l'objet d'un traitement d'interférences à bord du satellite (5) multifaisceau avant leur retransmission vers le sol.

35. Réseau selon l'une des revendications 19 à 34, **caractérisé en ce que** le classement en fréquence des liaisons (3) montantes et l'attribution des bandes (1) de liaisons des liaisons (3) montantes sont réitérés périodiquement.

**36.** Réseau selon l'une des revendications 19 à 35, **caractérisé en ce que** les faisceaux auxquels est attribuée une même bande (2) montante sont non adjacents.

**Claims**

**1.** Method for dynamically assigning frequency subbands, referred to as link bands (1), of at least one frequency band, referred to as an uplink band (2), to radiofrequency uplinks (3) from terrestrial terminals (4) to a telecommunications satellite having a plurality of beams, referred to as a multibeam satellite (5), **characterised in that** for each beam of at least two beams to which the same uplink band (2) is assigned for the transmission of uplinks (3) in these beams, link bands (1) are assigned to the uplinks (3) of this beam according to a frequency classification of these uplinks (3) established as a function of the spectral power densities of these uplinks (3) upon reception by the multibeam satellite (5).

**2.** Method according to Claim 1, **characterised in that** the classification consists at least partly in distributing a plurality of uplinks (3) of the beam by frequency in the order of their spectral power densities upon reception by the multibeam satellite (5).

**3.** Method according to Claim 1 or 2, **characterised in that** the classification consists at least partly in distributing the uplinks (3) of the beam among a plurality of portions of the uplink band (2) as a function of the spectral power densities of the uplinks (3) of the beam upon reception by the multibeam satellite (5).

**4.** Method according to Claim 3, **characterised in that** a first portion (6) of the uplink band (2) corresponds to uplinks, referred to as attenuated links (17), whose spectral power densities upon reception by the multibeam satellite (5) are less than a spectral power density threshold.

**5.** Method according to Claims 2 and 4, **characterised in that** the classification consists at least partly in distributing the attenuated links (17) by frequency in the first portion (6) of the uplink band (2) in the order of their spectral power densities upon reception by the multibeam satellite (5).

**6.** Method according to one of Claims 4 and 5, **characterised in that** the spectral power density threshold corresponds to a power at least 0.5 decibel lower than the spectral power density of a reference uplink (18) upon reception by the multibeam satellite (5).

**7.** Method according to Claim 6, **characterised in that** the uplink which has the highest spectral power density, among the uplinks of the said beams to which the uplink band (2) is assigned, is selected as the reference uplink.

**8.** Method according to one of Claims 4 to 7, **characterised in that** the bandwidth of the first portion (6) is determined as a function of an estimated value, referred to as an estimated attenuation risk, of the risk for each uplink of the said beams to which the uplink (2) is assigned, that this uplink has a spectral power density lower than the spectral power density threshold upon reception by the multibeam satellite (5).

**9.** Method according to Claim 8, **characterised in that** the estimated attenuation risk is determined according to at least one statistical attenuation model.

**10.** Method according to Claim 9, **characterised in that** the statistical attenuation model is a statistical model of the risks of rainfall as a function of geographical positions and periods of the year.

**11.** Method according to Claim 8, **characterised in that** the estimated attenuation risk is determined as a function of:

- the number of attenuated uplinks of the said beams to which the uplink band (2) is assigned, and
- the total number of uplinks of the said beams to which the uplink band (2) is assigned.

**12.** Method according to one of Claims 4 to 11, **characterised in that** a second portion (7) of the uplink band (2) corresponds in particular to uplinks (18) of the beam whose spectral power densities upon reception by the multibeam satellite (5) are not lower than the power threshold.

**13.** Method according to Claim 12, **characterised in that** the first portion (6) and the second portion (7) together occupy the entire bandwidth of the uplink band (2).

**14.** Method according to one of Claims 1 to 13, **characterised in that** the multibeam satellite (5) comprises at least one on-board equipment unit adapted to process the transmissions received by the satellite over at least one frequency band, referred to as a processing band.

**15.** Method according to Claims 4 and 14, **characterised in that**:

- the first portion of the uplink band (6) is determined so as to be at least partly included in the processing band,

- the transmissions included in the processing band are regenerated on board the multibeam satellite (5) before they are retransmitted to the ground.

16. Method according to one of Claims 14 and 15, **characterised in that** the transmissions included in the processing band are subjected to interference processing on board the multibeam satellite (5) before they are retransmitted to the ground.

17. Method according to one of Claims 1 to 16, **characterised in that** the frequency classification of the uplinks (3) and the assignment of the link bands (1) of the uplinks (3) are repeated periodically.

18. Method according to one of Claims 1 to 17, **characterised in that** the beams to which the same uplink band (2) is assigned are not adjacent.

19. Network for transmitting data via a satellite, comprising means for dynamically assigning subbands, referred to as link bands (1), of at least one frequency band, referred to as an uplink band (2), to radiofrequency uplinks (3) from terrestrial terminals (4) to a telecommunications satellite having a plurality of beams, referred to as a multibeam satellite (5), **characterised in that** for each beam of at least two beams to which the same uplink band (2) is assigned for the transmission of uplinks (3) in these beams, the dynamic assignment means are adapted to carry out:

- at least one frequency classification of the uplinks (3) of this beam as a function of the spectral power densities of these uplinks (3) upon reception by the multibeam satellite (5),
- an assignment of the link bands (1) to these uplinks (3) as a function of this classification.

20. Network according to Claim 19, **characterised in that** the classification consists at least partly in distributing a plurality of uplinks (3) of the beam by frequency in the order of their spectral power densities upon reception by the multibeam satellite (5).

21. Network according to one of Claims 19 and 20, **characterised in that** the classification consists at least partly in distributing the uplinks (3) of the beam among a plurality of portions of the uplink band (2) as a function of the spectral power densities of the uplinks (3) of the beam upon reception by the multibeam satellite (5).

22. Network according to Claim 21, **characterised in that** a first portion (6) of the uplink band (2) corresponds to uplinks, referred to as attenuated links (17), whose spectral power densities upon reception by the multibeam satellite (5) are less than a spectral power density threshold.

23. Network according to one of Claims 20 and 22, **characterised in that** the classification consists at least partly in distributing the attenuated links (17) by frequency in the first portion (6) of the uplink band (2) in the order of their spectral power densities upon reception by the multibeam satellite (5).

24. Network according to one of Claims 22 and 23, **characterised in that** the spectral power density threshold corresponds to a power at least 0.5 decibel lower than the spectral power density of a reference uplink (18) upon reception by the multibeam satellite (5).

25. Network according to Claim 24, **characterised in that** the uplink which has the highest spectral power density, among the uplinks of the said beams to which the uplink band (2) is assigned, is selected as the reference uplink.

26. Network according to one of Claims 22 to 25, **characterised in that** the bandwidth of the first portion (6) is determined as a function of an estimated value, referred to as an estimated attenuation risk, of the risk for each uplink of the said beams to which the uplink (2) is assigned that this uplink has a spectral power density lower than the spectral power density threshold upon reception by the multibeam satellite (5).

27. Network according to Claim 26, **characterised in that** the estimated attenuation risk is determined according to at least one statistical attenuation model.

28. Network according to Claim 27, **characterised in that** the statistical attenuation model is a statistical model of the risks of rainfall as a function of geographical positions and periods of the year.

29. Network according to Claim 26, **characterised in that** the estimated attenuation risk is determined as a function of:

- the number of attenuated uplinks of the said beams to which the uplink band (2) is assigned, and
- the total number of uplinks of the said beams to which the uplink band (2) is assigned.

30. Network according to one of Claims 22 to 29, **characterised in that** a second portion (7) of the uplink band (2) corresponds in particular to uplinks (18) of the beam whose spectral power densities upon reception by the multibeam satellite (5) are not lower than the power threshold.

31. Network according to Claim 30, **characterised in that** the first portion (6) and the second portion (7) together occupy the entire bandwidth of the uplink band (2).

32. Network according to one of Claims 19 to 31, **characterised in that** the multibeam satellite (5) comprises at least one on-board equipment unit adapted to process regeneratively the transmissions received by the satellite over at least one frequency band, referred to as a processing band.

33. Network according to Claims 22 and 32, **characterised in that**:

> - the first portion of the uplink band (6) is determined so as to be at least partly included in the processing band,
> - the transmissions included in the processing band are regenerated on board the multibeam satellite (5) before they are retransmitted to the ground.

34. Network according to one of Claims 32 and 33, **characterised in that** the transmissions included in the processing band are subjected to interference processing on board the multibeam satellite (5) before they are retransmitted to the ground.

35. Network according to one of Claims 19 to 34, **characterised in that** the frequency classification of the uplinks (3) and the assignment of the link bands (1) of the uplinks (3) are repeated periodically.

36. Network according to one of Claims 19 to 35, **characterised in that** the beams to which the same uplink band (2) is assigned are not adjacent.

**Patentansprüche**

1. Verfahren zum dynamischen Vergeben von Teilbändern, sogenannten Verbindungsbändern (1), von mindestens einem Frequenzband, einem sogenannten Aufwärtsband (2), an Aufwärts-Hochfrequenzverbindungen (3) von Bodenstationen zu einem Telekommunikationssatelliten mit mehreren Strahlen, einem sogenannten Mehrstrahlsatelliten (5), **dadurch gekennzeichnet, daß** für jedes Bündel mit mindestens zwei Strahlen, denen ein gleiches Aufwärtsband (2) für die Übermittlung von Aufwärtsverbindungen (3) in diesen Bündeln zugeordnet wird, den Aufwärtsverbindungen (3) dieses Bündels nach einer Frequenzeinordnung dieser Aufwärtsverbindungen (3) Verbindungsbänder (1) zugeordnet werden, die je nach den spektralen Leistungsdichten bei Empfang dieser Aufwärtsverbindungen (3) durch den Mehrstrahlsatelliten erstellt sind.

2. Verfahren nach Anspruch 1, **dadurch gekennzeichnet, daß** die Einordnung zumindest zum Teil darin besteht, mehrere Aufwärtsverbindungen (3) des Bündels in der Reihenfolge ihrer spektralen Leistungsdichten bei Empfang durch den Mehrstrahlsatelliten (5) in Frequenz zu verteilen.

3. Verfahren nach einem beliebigen der vorstehenden Ansprüche 1 oder 2, **dadurch gekennzeichnet, daß** die Einordnung zumindest zum Teil darin besteht, die Aufwärtsverbindungen (3) des Bündels unter mehreren Abschnitten des Aufwärtsbands (2) je nach den spektralen Leistungsdichten bei Empfang der Aufwärtsverbindungen (3) durch den Mehrstrahlsatelliten (5) zu verteilen.

4. Verfahren nach Anspruch 3, **dadurch gekennzeichnet, daß** ein erster Abschnitt (6) des Aufwärtsbands (2) Aufwärtsverbindungen, sogenannten gedämpften Verbindungen (17) entspricht, deren spektrale Leistungsdichten bei Empfang durch den Mehrstrahlsatelliten (5) unter einer Schwelle der spektralen Leistungsdichte liegen.

5. Verfahren nach den vorstehenden Ansprüchen 2 und 4, **dadurch gekennzeichnet, daß** die Einordnung zumindest zum Teil darin besteht, die gedämpften Verbindungen (17) in der Reihenfolge ihrer spektralen Leistungsdichten bei Empfang durch den Mehrstrahlsatelliten (5) im ersten Abschnitt (6) des Aufwärtsbands (2) in Frequenz zu verteilen.

6. Verfahren nach einem der vorstehenden Ansprüche 4 oder 5, **dadurch gekennzeichnet, daß** die Schwelle der spektralen Leistungsdichte einer um mindestens 0,5 Dezibel geringeren Leistung im Vergleich zur spektralen Leistungsdichte einer Bezugsaufwärtsverbindung (18) bei Empfang durch den Mehrstrahlsatelliten (5) entspricht.

7. Verfahren nach Anspruch 6, **dadurch gekennzeichnet, daß** die Aufwärtsverbindung, die unter den Aufwärtsverbindungen der besagten Strahlenbündel, denen das Aufwärtsband (2) zugeordnet ist, die höchste spektrale Leistungsdichte umfaßt, als Bezugsaufwärtsverbindung gewählt wird.

8. Verfahren nach einem der vorstehenden Ansprüche 4 bis 7, **dadurch gekennzeichnet, daß** die Bandbreite des ersten Abschnitts (6) bestimmt wird in Abhängigkeit eines Schätzwerts, dem sogenannten geschätzten Dämpfungsrisiko, des Risikos für jede Aufwärtsverbindung der besagten Strahlenbündel, denen das Aufwärtsband (2) zugeordnet ist, daß diese Aufwärtsverbindung bei Empfang durch den Mehrstrahlsatelliten (5) eine spektrale Leistungsdichte unterhalb der Schwelle der spektralen Leistungsdichte aufweist.

9. Verfahren nach Anspruch 8, **dadurch gekennzeichnet, daß** das geschätzte Dämpfungsrisiko nach mindestens einem statistischen Dämpfungsmodell bestimmt wird.

10. Verfahren nach Anspruch 9, **dadurch gekennzeichnet, daß** das statistische Dämpfungsmodell ein statistisches Modell der Regenrisiken je nach den geographischen Positionen und den Jahreszeiten ist.

11. Verfahren nach Anspruch 8, **dadurch gekennzeichnet, daß** das geschätzte Dämpfungsrisiko bestimmt wird je nach:

    - der Anzahl gedämpfter Aufwärtsverbindungen der besagten Strahlenbündel, denen das Aufwärtsband (2) zugeordnet ist,
    - der Gesamtanzahl Aufwärtsverbindungen der besagten Strahlenbündel, denen das Auswärtsband (2) zugeordnet ist.

12. Verfahren nach einem beliebigen der Ansprüche 4 bis 11, **dadurch gekennzeichnet, daß** ein zweiter Abschnitt (7) des Aufwärtsbands (2) insbesondere Aufwärtsverbindungen (18) des Bündels entspricht, dessen spektrale Leistungsdichten bei Empfang durch den Mehrstrahlsatelliten (5) nicht unter der Leistungsschwelle liegen.

13. Verfahren nach Anspruch 12, **dadurch gekennzeichnet, daß** der erste Abschnitt (6) und der zweite Abschnitt (7) gemeinsam die gesamte Bandbreite des Aufwärtsbands (2) belegen.

14. Verfahren nach einem beliebigen der vorstehenden Ansprüche 1 bis 13, **dadurch gekennzeichnet, daß** der Mehrstrahlsatellit (5) zumindest eine Bordausrüstung umfaßt, die geeignet ist, eine Verarbeitung der vom Satelliten empfangenen Übertragungen auf mindestens einem Frequenzband, dem sogenannten Verarbeitungsband, durchzuführen.

15. Verfahren nach den Ansprüchen 4 und 14, **dadurch gekennzeichnet, daß**:

    - der erste Abschnitt des Aufwärtsbands (6) so festgelegt wird, daß er zumindest teilweise in das Verarbeitungsband eingeschlossen wird,
    - die in das Verarbeitungsband eingeschlossenen Übertragungen an Bord des Mehrstrahlsatelliten (5) vor ihrer Rückübertragung zum Boden regeneriert werden.

16. Verfahren nach einem der vorstehenden Ansprüche 14 oder 15, **dadurch gekennzeichnet, daß** die in das Verarbeitungsband eingeschlossenen Übertragungen vor ihrer Rückübertragung zum Boden Gegenstand einer Verarbeitung von Interferenzen an Bord des Mehrstrahlsatelliten (5) sind.

17. Verfahren nach einem der vorstehenden Ansprüche 1 bis 16, **dadurch gekennzeichnet, daß** die Frequenzeinordnung der Aufwärtsverbindungen (3) und die Zuweisung der Verbindungsbänder (1) der Aufwärtsverbindungen (3) in regelmäßigen Zeitabständen wiederholt werden.

18. Verfahren nach einem der vorstehenden Ansprüche 1 bis 17, **dadurch gekennzeichnet, daß** die Strahlenbündel, denen ein gleiches Aufwärtsband (2) zugeordnet wird, nicht aneinander angrenzen.

19. Netz für die Satellitenübertragung von Daten, das Mittel zur dynamischen Zuordnung von Teilbändern, sogenannten Verbindungsbändern, (1) von mindestens einem Frequenzband, einem sogenannten Aufwärtsband, (2) umfaßt, an Aufwärts-Hochfrequenzverbindungen (3) von Bodenstationen (4) an einen Telekommunikationssatelliten mit mehreren Strahlen, einem sogenannten Mehrstrahlsatelliten (5), **dadurch gekennzeichnet, daß** für jedes Strahlenbündel von mindestens zwei Strahlen, denen ein gleiches Aufwärtsband (2) zugeordnet wird, für die Übertragung von Aufwärtsverbindungen (3) in diesen Strahlen, die Mittel der dynamischen Zuordnung geeignet sind, um folgendes auszuführen:

    - mindestens eine Frequenzeinordnung der Aufwärtsverbindungen (3) dieses Strahlenbündels je nach den spektralen Leistungsdichten bei Empfang dieser Aufwärtsverbindungen (3) durch den Mehrstrahlsatelliten (5),
    - eine Zuordnung der Verbindungsbänder (1) an diese Aufwärtsverbindungen (3) je nach dieser Einordnung.

20. Netz nach Anspruch 19, **dadurch gekennzeichnet, daß** die Einordnung zumindest zum Teil darin besteht, mehrere Aufwärtsverbindungen (3) des Bündels in der Reihenfolge ihrer spektralen Leistungsdichten bei Empfang durch den Mehrstrahlsatelliten (5) in Frequenz zu verteilen.

21. Netz nach einem der vorstehenden Ansprüche 19 oder 20, **dadurch gekennzeichnet, daß** die Einordnung zumindest zum Teil darin besteht, die Aufwärtsverbindungen (3) des Bündels auf mehrere Abschnitte des Aufwärtsbands (2) in Abhängigkeit von der spektralen Leistungsdichte bei Empfang der Aufwärtsverbindungen (3) des Bündels durch den Mehrstrahlsatelliten (5) zu verteilen.

**22.** Netz nach Anspruch 21, **dadurch gekennzeichnet, daß** ein erster Abschnitt (6) des Aufwärtsbands (2) Aufwärtsverbindungen, sogenannten gedämpften Verbindungen (17) entspricht, deren spektrale Leistungsdichten bei Empfang durch den Mehrstrahlsatelliten (5) unter einer Schwelle der spektralen Leistungsdichte liegen.

**23.** Netz nach den vorstehenden Ansprüchen 20 und 22, **dadurch gekennzeichnet, daß** die Einordnung zumindest zum Teil darin besteht, die gedämpften Verbindungen (17) in der Reihenfolge ihrer spektralen Leistungsdichten bei Empfang durch den Mehrstrahlsatelliten (5) im ersten Abschnitt (6) des Aufwärtsbands (2) in Frequenz zu verteilen.

**24.** Netz nach einem der vorstehenden Ansprüche 22 oder 23, **dadurch gekennzeichnet, daß** die Schwelle der spektralen Leistungsdichte einer um mindestens 0,5 Dezibel geringeren Leistung im Vergleich zur spektralen Leistungsdichte einer Bezugsaufwärtsverbindung (18) bei Empfang durch den Mehrstrahlsatelliten (5) entspricht.

**25.** Netz nach Anspruch 24, **dadurch gekennzeichnet, daß** die Aufwärtsverbindung, die unter den Aufwärtsverbindungen der besagten Strahlenbündel, denen das Aufwärtsband (2) zugeordnet ist, die höchste spektrale Leistungsdichte umfaßt, als Bezugsaufwärtsverbindung gewählt wird.

**26.** Netz nach einem der vorstehenden Ansprüche 24 bis 25, **dadurch gekennzeichnet, daß** die Bandbreite des ersten Abschnitts (6) bestimmt wird in Abhängigkeit eines Schätzwerts, dem sogenannten geschätzten Dämpfungsrisiko, des Risikos für jede Aufwärtsverbindung der besagten Strahlenbündel, denen das Aufwärtsband (2) zugeordnet ist, daß diese Aufwärtsverbindung bei Empfang durch den Mehrstrahlsatelliten (5) eine spektrale Leistungsdichte unterhalb der Schwelle der spektralen Leistungsdichte aufweist.

**27.** Netz nach Anspruch 26, **dadurch gekennzeichnet, daß** das geschätzte Dämpfungsrisiko nach mindestens einem statistischen Dämpfungsmodell bestimmt wird.

**28.** Netz nach Anspruch 27, **dadurch gekennzeichnet, daß** das statistische Dämpfungsmodell ein statistisches Modell der Regenrisiken je nach den geographischen Positionen und den Jahreszeiten ist.

**29.** Netz nach Anspruch 26, **dadurch gekennzeichnet, daß** das geschätzte Dämpfungsrisiko bestimmt wird je nach:

- der Anzahl gedämpfter Aufwärtsverbindungen der besagten Strahlenbündel, denen das Aufwärtsband (2) zugeordnet ist,
- der Gesamtanzahl Aufwärtsverbindungen der besagten Strahlenbündel, denen das Auswärtsband (2) zugeordnet ist.

**30.** Netz nach einem beliebigen der Ansprüche 22 bis 29, **dadurch gekennzeichnet, daß** ein zweiter Abschnitt (7) des Aufwärtsbands (2) insbesondere Aufwärtsverbindungen (18) des Bündels entspricht, dessen spektrale Leistungsdichten bei Empfang durch den Mehrstrahlsatelliten (5) nicht unter der Leistungsschwelle liegen.

**31.** Netz nach Anspruch 30, **dadurch gekennzeichnet, daß** der erste Abschnitt (6) und der zweite Abschnitt (7) gemeinsam die gesamte Bandbreite des Aufwärtsbands (2) belegen.

**32.** Netz nach einem beliebigen der vorstehenden Ansprüche 19 bis 31, **dadurch gekennzeichnet, daß** der Mehrstrahlsatellit (5) zumindest eine Bordausrüstung umfaßt, die geeignet ist, eine regenerierende Verarbeitung der vom Satelliten empfangenen Übertragungen auf mindestens einem Frequenzband, dem sogenannten Verarbeitungsband, durchzuführen.

**33.** Netz nach den Ansprüchen 22 und 32, **dadurch gekennzeichnet, daß**:

- der erste Abschnitt des Aufwärtsbands (6) so festgelegt wird, daß er zumindest teilweise in das Verarbeitungsband eingeschlossen wird,
- die in das Verarbeitungsband eingeschlossenen Übertragungen an Bord des Mehrstrahlsatelliten (5) vor ihrer Rückübertragung zum Boden regeneriert werden.

**34.** Netz nach einem der vorstehenden Ansprüche 32 oder 33, **dadurch gekennzeichnet, daß** die in das Verarbeitungsband eingeschlossenen Übertragungen vor ihrer Rückübertragung zum Boden Gegenstand einer Verarbeitung von Interferenzen an Bord des Mehrstrahlsatelliten (5) sind.

**35.** Netz nach einem der vorstehenden Ansprüche 19 bis 34, **dadurch gekennzeichnet, daß** die Frequenzeinordnung der Aufwärtsverbindungen (3) und die Zuweisung der Verbindungsbänder (1) der Aufwärtsverbindungen (3) in regelmäßigen Zeitabständen wiederholt werden.

**36.** Netz nach einem der vorstehenden Ansprüche 19 bis 35, **dadurch gekennzeichnet, daß** die Strahlenbündel, denen ein gleiches Aufwärtsband (2) zugeordnet wird, nicht aneinander angrenzen.

Fig 1

EP 1 882 316 B1

Fig 2

EP 1 882 316 B1

# Fig 3

Fig 4

|  | i1 | i2 | i3 |
|---|---|---|---|
| I | B,C,D,G | B,D,G,I, K,M | B,G,I,K,M |
| II | B,C,G,D | I,B,D,G, M,K | B,I,K,G,M |
| III | A,E,F,H,I, J,K,L,M,N | A,C,E,F,H, J,L,N | A,C,D,E,F, H,J,L,N |

EP 1 882 316 B1

## Fig 5